Europäisches Patentamt

European Patent Office

Office européen des brevets

(19)

(11) **EP 1 067 713 A1**

(12) **EUROPEAN PATENT APPLICATION**

(43) Date of publication:
   **10.01.2001 Bulletin 2001/02**

(51) Int Cl.7: **H04B 7/185**

(21) Application number: **99401714.3**

(22) Date of filing: **08.07.1999**

(84) Designated Contracting States:
   **AT BE CH CY DE DK ES FI FR GB GR IE IT LI LU MC NL PT SE**
   Designated Extension States:
   **AL LT LV MK RO SI**

(71) Applicant: **ALCATEL**
   **75008 Paris (FR)**

(72) Inventors:
   • **Dieudonne, Marc**
     **91430 Igny (FR)**

   • **Bouin, Jean**
     **31000 Toulouse (FR)**

(74) Representative: **Lamoureux, Bernard et al**
   **COMPAGNIE FINANCIERE ALCATEL**
   **Dépt. Propriété industrielle**
   **30, avenue Kléber**
   **75116 Paris (FR)**

(54) **A method and apparatus for transmitting and receiving digital packets in a transmission system using moving satellites**

(57)   The invention relates to a transmitter for a telecommunications system using moving satellites (10, 12) and in which signals are transmitted in the form of digital data packets. The transmitter introduces hand-over information into the transmitted signal that can be used on reception so that data transiting via a first satellite can be distinguished from data transiting via a second satellite that takes a call over. The transmitter is characterized in that the hand-over information is a date signal for each packet. The date signal represents the instant at which the packet was transmitted.

FIG.1

## Description

The invention relates to a system for transmitting digital data via moving satellites.

The satellite telecommunications systems that are presently under development are essentially of the low earth orbit (LEO) type or of the medium earth orbit (MEO) type, e.g. satellites at altitudes lying in the range 800 km to 1500 km. Compared with geostationary satellite telecommunications systems, such moving satellite systems have the advantage that the signals travel over distances that are considerably shorter; a geostationary satellite must necessarily be at an altitude of about 36,000 km above the equator. As a result, such systems using satellites in low or medium earth orbit can be used for so-called "real time" telecommunications, such as telephone conversations, facsimile, etc. In addition, because of the short propagation distances, signal attenuation is smaller than it is with geostationary satellite systems, thereby making a greater communications capacity available.

Nevertheless, satellites in low or medium earth orbit necessarily move relative to users who are usually stationary or are capable of moving at speeds that are small compared with satellite speeds, so that as a result each user can be seen from any given satellite for a limited length of time only, e.g. of the order of 10 to 15 minutes. Under such circumstances, a call transiting via a satellite that is close to the limit of visibility must be transferred to another satellite that is going to remain visible after the preceding satellite has moved out of the "field of view" of the user. This type of call transfer from one satellite to another is commonly referred to as "hand-over" or as "hand-off".

Given that, in general, transmission times via two different satellites are of different values, it is necessary to take special precautions to ensure that, on reception, data is recovered in the same order as that in which it was transmitted.

To this end, data is transmitted in the form of packets (also known as "cells") of digital data, and the packets are grouped together into frames. A hand-over from one path to another takes place at the end of a frame. For this purpose, the last packet of the frame that is to transit over a first path includes information, known as a "mark", specifying its nature, i.e. that this is the last packet of the last frame over the first path, and on reception, a buffer memory is provided which retains the packets that are received over the second path until the last packet of the last frame has been received over the first path.

That known solution has the advantage of requiring only a small number of bits to ensure that information is processed in sequence. Nevertheless, it suffers from the major handicap whereby any loss of the marked packet gives rise to a severe disturbance on the call concerned.

The invention remedies that drawback.

It is characterized in that, at least during handover periods, each packet has data allocated thereto representative of its transmission instant or date.

Thus, on reception, packets can be re-ordered as a function of the information representing their transmission times. If a packet is lost during transmission, then that does not disturb reception of other packets.

The transmission date can be introduced into packets even when they are not transmitted during hand-over periods. In a variant, the transmission date is introduced into each packet only during hand-over periods.

In an embodiment of the invention, on reception, each received packet is delivered at an instant which is equal to its transmission instant delayed by a predetermined length of time that is not less than the maximum transit time, i.e. corresponding to the longest possible transmission distance or the greatest propagation time difference between two paths.

It can be particularly simple to implement a receiver apparatus that implements this method.

In order to be able to distinguish two successive packets, the clock must have a period T that satisfies the following conditions:

$$(1) \qquad T < \frac{L}{B}$$

In this formula, L is the minimum length of a packet and B is the transmission rate (bits per unit time) of the call.

The number of bits required for the date signal needs to take account of the following considerations:

Firstly, the period T of the clock must be shorter than the duration of the shortest packet, so that two consecutive short packets carry dates that differ by not less than one unit T.

Secondly, it must be possible to distinguish without ambiguity between two packets that arrive at the same instant but that has been subjected respectively to a long delay and to a short delay. If D is the maximum variation in transit delay time, then it is necessary for the date field to have more than D/T values, i.e. $Log_2 (D/T)$ bits.

To make it possible on transmission to give each packet a signal that represents its date, a local clock is provided. Similarly, to read the dates of the packets that are received, it is also necessary to provide a clock. When each received packet is delivered at a moment that is equal to its transmission moment delayed by a predetermined length of time, the receive clock should be synchronized with the transmit clock.

The transmit and receive clocks can be synchronized in various ways. For example, the clock provided by the global positioning system (GPS) can be used. In another example, the various relay satellites transmit synchronized clock signals which are fed to all of the transmitter and receiver apparatuses.

It is also possible to make use of a clock that is to be found in a management or control station. In general, satellite telecommunications systems make use of a plurality of ground control stations through which calls pass. A call between two subscribers of the satellite system is initially transmitted from the first subscriber to the control station via a satellite, and is subsequently transmitted from the station to the second subscriber via the same satellite or via some other satellite. The control station is also connected to other telecommunications networks that do not necessarily make use of the satellite.

The invention applies to all telecommunications systems making use of moving satellites and in which information is transmitted in the form of packets. The packets can be of any kind. By way of example, mention can be made of asynchronous hand-over mode (ATM) cells that are of fixed length and of packets that are of variable length. Transmission can take place in connected mode (as in the ATM protocol) or in non-connected mode (as in the Internet protocol (IP)).

A packet can be simple or complex. By way of example, the invention applies to IP packets constituted by a multiplex of AAL2 mini-packets, i.e. of type 2 ATM adaptation layer packets, as defined in ITU-T recommendation I.363-2.

The invention can also apply to a combined frame carrying a connection in circuit mode and in packet mode. In circuit mode, information is identified by its position within the frame, while in packet mode, information is identified by a label or a name.

The clock that supplies the date can optionally be synchronized with the clock that provides synchronization for the transmission bits. When the data clock is synchronized with the bit clock, its frequency is a submultiple of the bit transmission frequency.

Thus, in a first aspect, the invention provides a transmitter for a telecommunications system via moving satellites in which signals are transmitted in the form of digital data packets, said transmitter introducing hand-over information into the transmitted signal, which information is suitable for use on reception to ensure that the data transiting via a first satellite can be distinguished from the data transiting via a second satellite that takes a call over. The transmitter is characterized in that the hand-over information is a date signal for each packet, representing the instant at which the packet is transmitted.

By way of example, the date is supplied by a clock synchronized by the GPS system or by a clock on board the satellite, or by a clock in a control station.

In another aspect, the invention also provides a receiver for a telecommunications system via moving satellites in which signals are transmitted in the form of digital data packets, a transmitted signal including hand-over information usable on reception to ensure that data transiting via a first satellite can be distinguished from data transiting via a second satellite which takes a call over. The receiver is characterized in that the hand-over information is a date signal introduced into each packet and representing the instant at which said packet is transmitted, and the receiver includes means for detecting the date signal and means for using it for the purpose of ordering the packets as a function of said information.

In one embodiment, to put received packets into order, the receiver includes means for releasing each packet at a date corresponding to its transmission date delayed by a predetermined length of time.

To read the date that appears in a received packet, the receiver makes use, for example, of a clock that is synchronized by the GPS system or by a clock on board each satellite, or by a clock in a control station.

The invention also provides a data packet for transmission via a telecommunications system using moving satellites, in which signals are transmitted in the form of digital data packets, each transmitted signal including hand-over information that can be used on reception to enable data transiting via a first satellite to be distinguished from data transiting via a second satellite that takes the call over. The packet is characterized in that the packet includes information about its transmission date.

The invention also provides a set of such packets characterized in that the period T of the clock signal giving the transmission date of each packet is such that:

$$T < \frac{L}{B}$$

where L is the minimum length of a packet and B is its transmission rate.

In such a set, it is preferable for the number K of bits allocated to the date to be such that $K > Log_2 D/T$ where D is not less than the greatest time difference between two paths.

The invention also provides a method of telecommunication using satellites that are moving, in which information is transmitted in the form of digital data packets, and in which means are provided to hand calls transiting via one satellite over to another satellite, calls transiting via two satellites being re-ordered on reception. The method is characterized in that, for the purpose of re-ordering on reception, a signal representing the transmission date of each packet is introduced therein on transmission.

Other characteristics and advantages of the invention will appear on reading the following description of various embodiments, the description being given with reference to the accompanying drawing, in which:

· Figure 1 is a diagram of a telecommunications system to which the method of the invention applies; and
· Figure 2 is a diagram of a data packet of the invention.

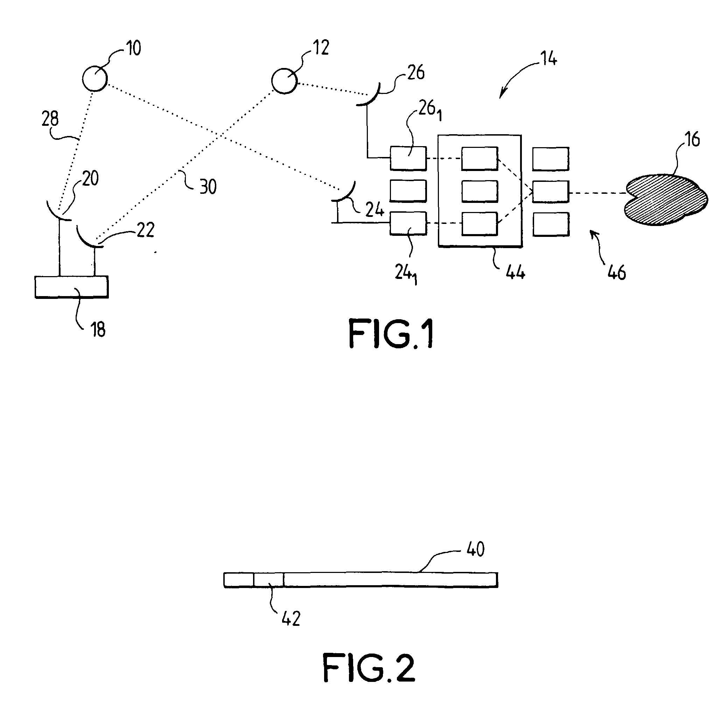

The telecommunications system shown in Figure 1 is a telecommunications system making use of satellites 10, 12 in low earth orbit (LEO) in which the satellites constitute a portion of a constellation (not shown) for covering all of the earth, or at least a large portion thereof. In this system, the earth is subdivided into zones, each of which has a diameter of 700 km, for example, and within each zone there is provided a connection or control station 14 for relaying calls between subscribers of the satellite telecommunications system or between subscribers of said telecommunications system and subscribers of other networks 16.

Each satellite 10, 12 provides a relay between calls in one or more zones that are fixed relative to the ground. Naturally, such a relay can be provided only when the satellite is visible in the zone or at least a portion of the zone.

Given that the satellites are seen as moving, it is necessary when one satellite moves away from the zone, for example satellite referenced 10, for the satellite to be replaced by another satellite 12 which takes over the relaying of a call. Call hand-over must take place while both satellites are visible from the zone.

In Figure 1, there is shown a terminal 18 belonging to a subscriber of the telecommunications system. This terminal has two antennae 20 and 22. The first antenna 20 is for communicating with the station 14 via the satellite 10. The station 14 has an antenna 24 pointing towards the satellite 10. The second antenna 22 of the terminal points towards the second satellite 12 and it is also for communicating with the station 14, which station also has an antenna 26 pointing to the satellite 12.

The distances traveled by the signals following the first path 28, via the satellite 10, are different from the distances traveled by the signals following the second path 30 via the satellite 12. Under such conditions, it is necessary to take precautions so as to ensure that the operation of handing a call over from the path 28 to the path 30 is properly synchronized. For example, if the new path 30 is shorter than the old path 28 that it is about to replace, the last signals transiting over the longer path will reach their destination after signals that are transmitted later, but that transit over the shorter path. This problem arises regardless of the travel direction, i.e. whether a call is traveling from terminal 18 to station 14 or from station 14 to a terminal 18.

To solve this problem, the invention provides for transmitting data in the form of packets 40 (Figure 2) and for each packet to have date information 42 allocated thereto specifying the moment or date at which it was transmitted. This date information may be true time, or may be a sequence number.

To make use of this date information, provision is made on reception for a buffer memory and for means (not shown) that deliver packets to the network in the order that corresponds to their transmission dates.

In a simple embodiment, to order packets on reception, provision is made to release each received packet at a date corresponding to the date given in the packet plus a predetermined delay. This predetermined delay is not less than the greatest propagation time difference that can exist between the two paths.

Finally, the station 14 is provided in conventional manner with modems $24_1 ... 26_1$ associated with each of the antennas, a switch 44, and input/output terminals 46 for connection to the network 16.

**Claims**

1. A transmitter for a telecommunications system via moving satellites (10, 12) in which signals are transmitted in the form of digital data packets, said transmitter introducing hand-over information into the transmitted signal, which information is suitable for use on reception to ensure that the data transiting via a first satellite can be distinguished from the data transiting via a second satellite that takes a call over, the transmitter being characterized in that the hand-over information is a date signal (42) for each packet, representing the instant at which the packet is transmitted.

2. A transmitter according to claim 1, characterized in that the date is supplied by a clock synchronized by the GSP system or by a clock on board a satellite, or by a clock in a control station.

3. A receiver for a telecommunications system via moving satellites in which signals are transmitted in the form of digital data packets, a transmitted signal including hand-over information usable on reception to ensure that data transiting via a first satellite can be distinguished from data transiting via a second satellite which takes a call over, the receiver being characterized in that the hand-over information is a date signal introduced into each packet and representing the instant at which said packet is transmitted, and the receiver includes means for detecting the date signal and means for using it for the purpose of ordering the packets as a function of said information.

4. A receiver according to claim 3, characterized in that to re-order received packets, the receiver includes means for releasing each packet at a date which corresponds to its transmission date delayed by a predetermined length of time.

5. A receiver according to claim 3 or 4, characterized in that in order to read the date that is to be found in a received packet, use is made of a clock that is synchronized by the GPS system, or by a clock on board each satellite, or by a clock in a control station.

**6.** A data packet for transmission via a telecommunications system using moving satellites, in which signals are transmitted in the form of digital data packets, each transmitted signal including hand-over information that can be used on reception to enable data transiting via a first satellite to be distinguished from data transiting via a second satellite that takes a call over, characterized in that the packet (40) includes information (42) about its transmission date.

**7.** A set of packets, each of which is according to claim 6, the set being characterized in that the period T of the clock signal giving the transmission date of each packet is such that:

$$T < \frac{L}{B}$$

where L is the minimum length of a packet and B is its transmission rate.

**8.** A set according to claim 7, characterized in that the number K of bits allocated to the date is such that $K > Log_2 D/T$ where D is not less than the greatest time difference between two paths.

**9.** A method of telecommunication using satellites that are moving, in which information is transmitted in the form of digital data packets, and in which means are provided to hand calls transiting via one satellite over to another satellite, calls transiting via two satellites being re-ordered on reception, the method being characterized in that, for the purpose of re-ordering on reception, a signal representing the transmission date of each packet is introduced therein on transmission.

EP 1 067 713 A1

FIG.1

FIG.2

**European Patent Office**

## EUROPEAN SEARCH REPORT

Application Number

EP 99 40 1714

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 537 679 A (CROSBIE ET AL.) 16 July 1996 (1996-07-16) * column 3, line 12 – line 20 * * column 4, line 55 – column 5, line 5 * * column 6, line 5 – line 12 * * column 8, line 4 – line 18 * * column 8, line 65 – column 10, line 27 * | 1-9 | H04B7/185 |
| Y | EP 0 800 295 A (SOONY) 8 October 1997 (1997-10-08) * claim 1 * | 1-9 | |
| A | US 5 920 804 A (ARMBRUSTER ET AL.) 6 July 1999 (1999-07-06) * claims 1-5 * | 1-9 | |
| A | EP 0 740 478 A (HITACHI) 30 October 1996 (1996-10-30) * page 2, line 55 – page 3, line 41 * | 1-9 | |
| | | | TECHNICAL FIELDS SEARCHED (Int.Cl.7) |
| | | | H04B |

The present search report has been drawn up for all claims

| Place of search | Date of completion of the search | Examiner |
|---|---|---|
| THE HAGUE | 1 March 2000 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 40 1714

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2000

| Patent document cited in search report | | Publication date | Patent family member(s) | | Publication date |
|---|---|---|---|---|---|
| US 5537679 | A | 16-07-1996 | NONE | | |
| EP 800295 | A | 08-10-1997 | JP | 9275420 A | 21-10-1997 |
| | | | US | 5991307 A | 23-11-1999 |
| US 5920804 | A | 06-07-1999 | CA | 2195171 A | 03-10-1997 |
| | | | IT | RM970116 A | 02-10-1997 |
| | | | JP | 10032532 A | 03-02-1998 |
| EP 740478 | A | 30-10-1996 | JP | 8297919 A | 12-11-1996 |
| | | | JP | 8297922 A | 12-11-1996 |

EPO FORM P0459

For more details about this annex : see Official Journal of the European Patent Office, No. 12/82